# EUROPEAN PATENT APPLICATION

(11) **EP 1 117 065 A1**
(43) Date of publication of application: **18.07.2001**
(21) Application number: 00300194.8
(22) Date of filing: 12.01.2000
(51) Int. Cl.: G06K 19/077

(54) **Apparatus for applying IC card to FD corresponding electronic unit**

(71) Applicant: YAMAICHI ELECTRIC CO., LTD., Ohta-ku, Tokyo (JP); Mitsumi Electric Company Ltd., Chofu-shi Tokyo (JP); Smartdisk International Inc., Tokyo (JP)
(72) Inventor: Ito, Toshiyasu, Togane-shi, Chiba-ken (JP); Higashi, Yoshitaka, Yamagata-shi, Yamagata-ken (JP); Seno, Koichi, Yamagata-shi, Yamagata-ken (JP); Komatsu, Hisateru, Tendo-shi, Yamagata-ken (JP)
(74) Representative: Rees, Alexander Ellison

(57) **Abstract**

An apparatus for applying an IC card to an FD corresponding electronic unit comprising contact means for forming an electric signal circuit between an FD inlet port of the FD corresponding electronic unit and a dummy FD cartridge, the contact means being contacted with each other through a contacting window formed in a cover plate or a base plate constituting the dummy FD cartridge when the dummy FD cartridge is inserted into the FD inlet port, a magnetic signal circuit being switched to an electric signal circuit through contact of the contact means so that read or write can be carried out between the IC card withdrawably inserted into the dummy FD cartridge and the FD corresponding electronic unit by electric signal.

## Description

### BACKGROUND OF THE INVENTION

### 1. Field of the Invention

This invention relates to an apparatus for inserting a dummy FD cartridge with an IC card received therein into an FD corresponding electronic unit so that read/write can be performed correctly by means of electric signal.

### 2. Related Art

U.S. pat. No. 5,584,043 (Domestic Publication of International Patent Application No. H6-509194) discloses, an apparatus for applying an IC card to an FD corresponding electronic unit comprising a dummy FD cartridge having an exterior form so designed that it can be inserted into an FD inlet port of the FD corresponding electronic unit which includes therein, as means for applying an IC card to an FD corresponding electronic unit so that read/write can be performed by means of electric signal, a card receiving space, an electromagnetic converter disposed in such a manner as to be placed in opposing relation to a magneto-electric converting head when the dummy FD cartridge is inserted into the FD inlet port and a battery.

However, since the above conventional apparatus is designed on a basis of input/output by means of magnetic signal between the FD corresponding electronic unit and the dummy FD cartridge, read/write speed is slow and time consuming between the IC card and the FD corresponding electronic unit. This problem becomes particularly conspicuous in the field of voice and dynamic image which usually require a huge data amount.

Moreover, transfer of magnetic signal between the magneto-electric converting head and the magneto-electric converter tends to provide insufficient reliability in input/output attributable to the characteristics of the head or the magneto-electric converter.

The present invention has been accomplished in view of the above situation.

### SUMMARY OF THE INVENTION

It is therefore a general object of the present invention to provide an apparatus for applying an IC card to an FD corresponding electronic unit, capable of obviating the above-mentioned problems inherent in the prior art devices.

In order to achieve the above object, there is essentially provided an apparatus for applying an IC card to an FD corresponding electronic unit comprising contact means for forming an electric signal circuit between an FD inlet port of the FD corresponding electronic unit and a dummy FD cartridge, the contact means being contacted with each other through a contacting window formed in a cover plate or a base plate constituting the dummy FD cartridge when the dummy FD cartridge is inserted into the FD inlet port, a magnetic signal circuit being switched to an electric signal circuit through contact of the contact means so that read or write can be carried out between the IC card withdrawably inserted into the dummy FD cartridge and the FD corresponding electronic unit by electric signal.

From another aspect of the present invention, there is also provided an apparatus for applying an IC card to an FD corresponding electronic unit comprising contact means for forming an electric signal circuit between an FD inlet port of the FD corresponding electronic unit and a dummy FD cartridge, the contact means being contacted through a contacting window formed in a cover plate or a base plate constituting the dummy FD cartridge when the dummy FD cartridge is inserted into the FD inlet port, and switch means for switching from a magnetic signal circuit to an electric signal circuit by detecting means disposed at the dummy FD cartridge when the dummy FD cartridge is inserted into the FD inlet port, read or write being carried out between the IC card withdrawably inserted into the dummy FD cartridge and the FD corresponding electronic unit by electric signal.

In a preferred embodiment, the detecting means is capable of detecting a recess formed in the dummy FD cartridge. The recess is represented, for example, by a through-hole formed in the cover plate and/or the base plate.

From a further aspect of the present invention, there is provided an apparatus for applying an IC card to an FD corresponding electronic unit in which a dummy FD cartridge is inserted into an FD inlet port formed in the FD corresponding electronic unit so that read or write is carried out between the IC card withdrawably inserted into the dummy FD cartridge and the FD corresponding electronic unit by electric signal, the apparatus comprising a wiring circuit board disposed within the dummy FD cartridge and adapted to form a control circuit to be connected to the IC card, a contacting window formed in a local area of a base plate or a cover plate which is disposed in opposing relation to the wiring circuit board, and a plurality of control circuit contact terminals arranged in parallel relation on a surface of the wiring circuit board being disposed within the contacting window or in opposing relation to the contacting window, electric signal circuit contact terminals disposed within the FD inlet port and the control circuit contact terminals being brought into contact with each other through the contacting window when the dummy FD cartridge is inserted into the FD inlet port of the FD corresponding electronic unit, thereby closing the electric signal circuit.

From a still further aspect of the present invention, there is provided an apparatus for applying an IC card to an FD corresponding electronic unit in which a dummy FD cartridge is inserted into an FD inlet port formed in the FD corresponding electronic unit so that read or write is carried out between the IC card withdrawably inserted into the dummy FD cartridge and the FD corresponding electronic unit by electric signal, the apparatus comprising a wiring circuit board disposed within the dummy FD cartridge and adapted to form a control circuit to be connected to the IC card, a contacting window formed in a local area of a base plate or a cover plate which is disposed in opposing relation to the wiring circuit board, and a connector block mounted on the wiring circuit board being disposed within the contacting window or in opposing relation to the contacting window, and a control circuit contact terminal had by the connector block being disposed within the contacting window or in opposing relation to the contacting window, electric signal circuit contact terminals disposed within the FD inlet port and the control circuit contact terminals being brought into contact with each other through the contacting window when the dummy FD cartridge is inserted into the FD inlet port of the FD corresponding electronic unit, thereby closing the electric signal circuit.

According to the present invention, the circuit is switched from the magnetic signal circuit to the electric signal circuit by inserting the dummy cartridge equipped with the contact means for forming an electric signal circuit, so that data transfer is carried out between the FD corresponding electronic unit and the dummy FD cartridge by electric signal. Accordingly, the writing speed to the IC card and the reading speed from the IC card to the FD corresponding electronic unit can be enhanced remarkably.

Moreover, since no data transfer is carried out by means of magnetic signal, the writing and reading reliability is extensively enhanced.

Furthermore, since the contacting window is formed in a local area of the cover plate or the base plate which constitutes the dummy FD cartridge so that the electric signal circuit contact terminal and the control circuit contact terminal are brought into contact with each other through the contacting window to thereby close the electric signal circuit, the reading and writing can be carried out correctly by electric signal between the IC card and the FD corresponding electronic unit.

A more complete application of the invention and many of the attendant advantages thereof will be readily obtained as the same becomes better understood by reference to the following detailed description when considered in connection with the accompanying drawings.

### BRIEF DESCRIPTION OF THE DRAWINGS

Fig. 1(A) is a perspective view showing an outer appearance of a dummy FD cartridge having a means for forming an electric signal circuit and a magneto-electric converter for forming a magnetic signal circuit, and Fig. 1(B) is a sectional view showing an IC cartridge insertion portion formed in the dummy FD cartridge;

Fig. 2(A) is a perspective view showing an outer appearance of a dummy FD cartridge having a means for forming an electric signal circuit, and Fig. 2(B) is a sectional view, like Fig. 1(B) showing an IC cartridge insertion portion formed in the dummy FD cartridge;

Fig. 3 is a block diagram showing an electric signal circuit formed between an FD corresponding electronic unit and a dummy FD cartridge;

Fig. 4 is a block diagram showing an electric signal circuit and a magnetic signal circuit formed between an FD corresponding electronic unit and a dummy FD cartridge;

Fig. 5 is a block diagram showing a magnetic signal circuit formed between an FD corresponding electronic unit and a dummy FD cartridge;

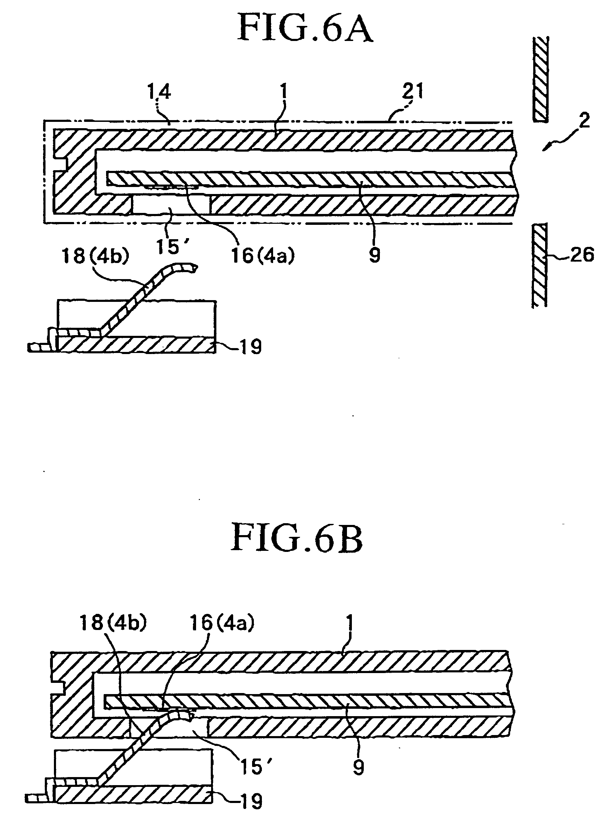

Figs, 6(A) and 6(B) are sectional views showing a state when a dummy FD having a contact means for forming an electric signal circuit is inserted into an FD inlet port, Fig. 6(A) shows a state before the contact means is brought into a contacting position and Fig. 6(B) shows a state after the contact means is brought into a contacting position;

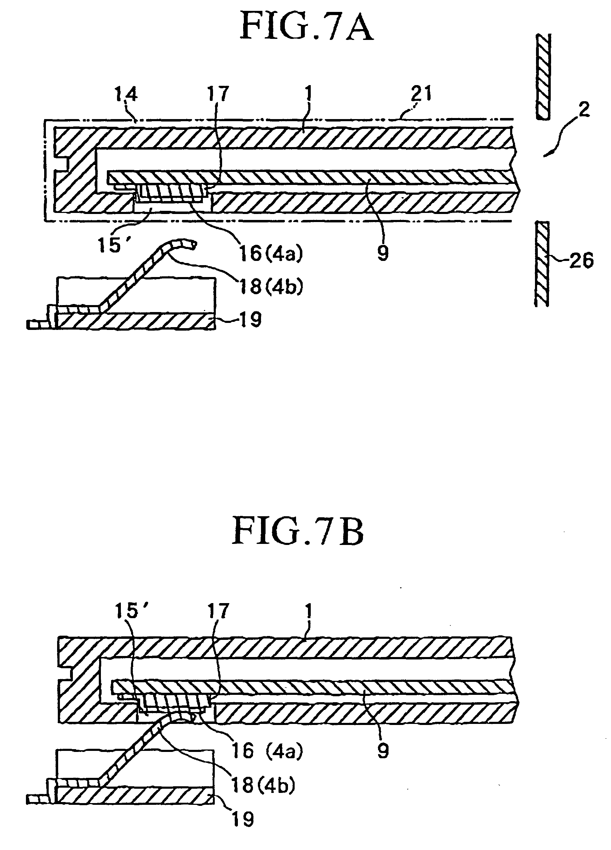

Figs. 7(A) and 7(B) are sectional views showing a state when a dummy FD having a contact means for forming an electric signal circuit is inserted into an FD inlet port, Fig. 7(A) shows a state before the contact means is brought into a contacting state and Fig. 7(B) shows a state after the contact means is brought into a contacting state, in the example of Figs. 7(A) and 7(B), the contact means being formed by mounting a connector block on a wiring circuit board, while in the example of Figs. 6(A) and 6(B), the contact means being formed on a lead end on a wiring circuit board;

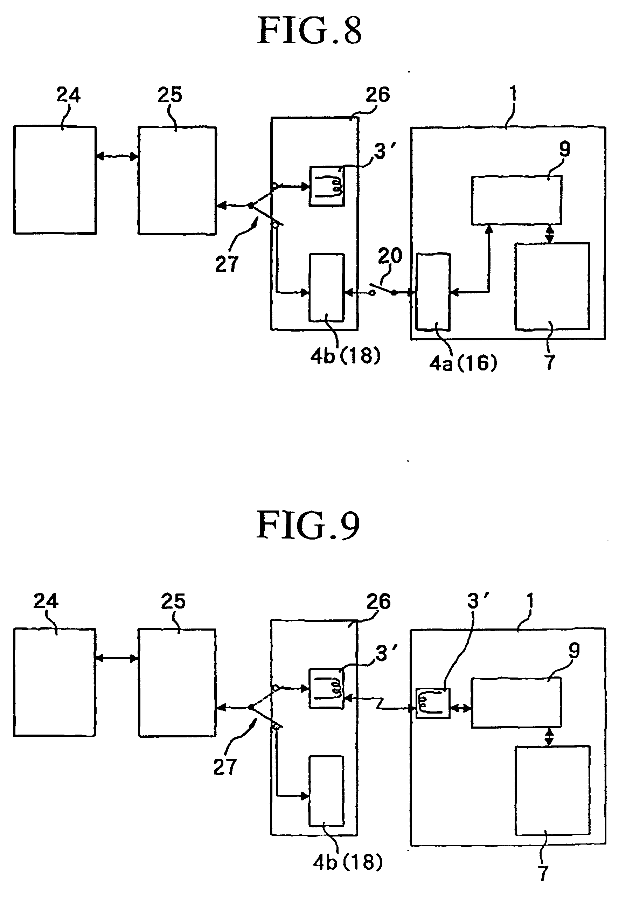

Fig. 8 is a block diagram of an electric signal circuit, in which a means for detecting the insertion of a dummy FD cartridge having a contact means for forming an electric signal circuit and switching the circuit is disposed within an FD corresponding electronic unit;

Fig. 9 is a block diagram of an electric signal circuit and a magnetic signal circuit, in which a means for detecting the insertion of a dummy FD cartridge having a contact means for forming an electric signal circuit and a converter for forming a magnetic signal circuit and switching the circuit is disposed within an FD corresponding electronic unit;

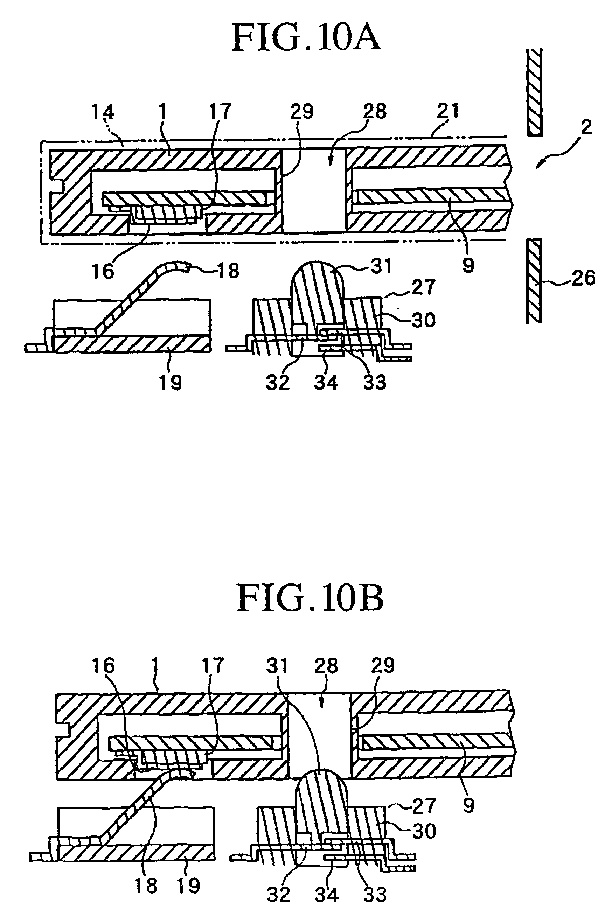

Figs. 10(A) and 10(B) are sectional views showing a specific example of a construction of the detecting means and switch means and sectional views showing a working condition of the switch means when a dummy FD cartridge having the contact means and the detecting means is inserted into an RD inlet port; and

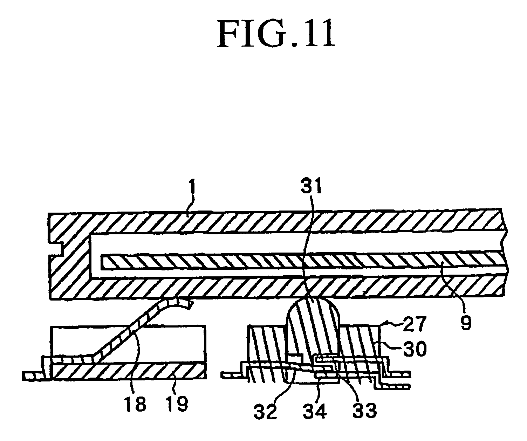

Fig. 11 is a sectional view showing a working state of a switch means when a dummy FD cartridge or FD having only a magneto-electric converter is inserted in an FD inlet port.

### DETAILED DESCRIPTION OF THE INVENTION

The present invention embodied in the form of an apparatus for applying an IC card to an FD corresponding electronic unit will now be described in detail with reference to the accompanying drawings.

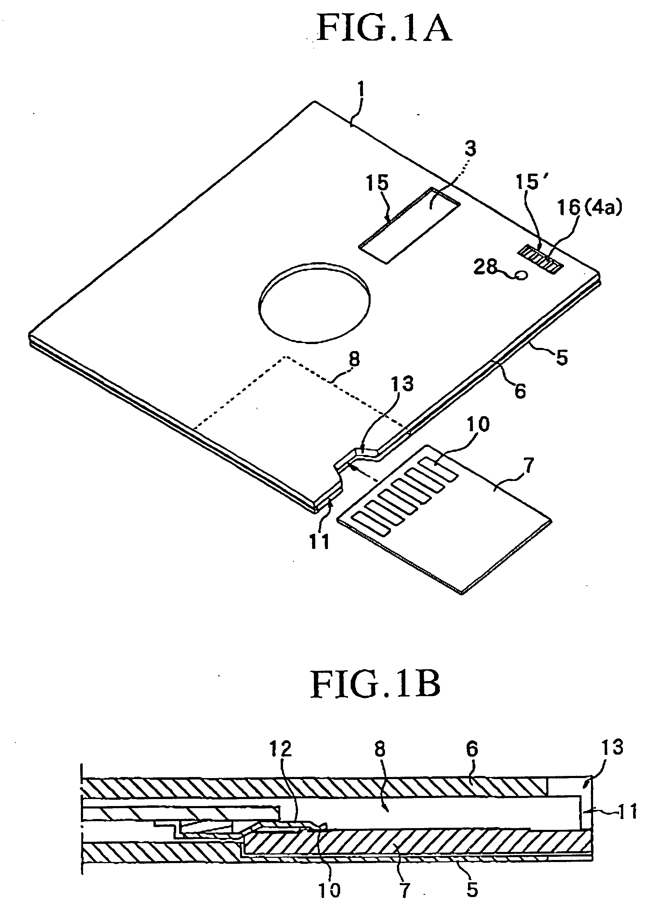

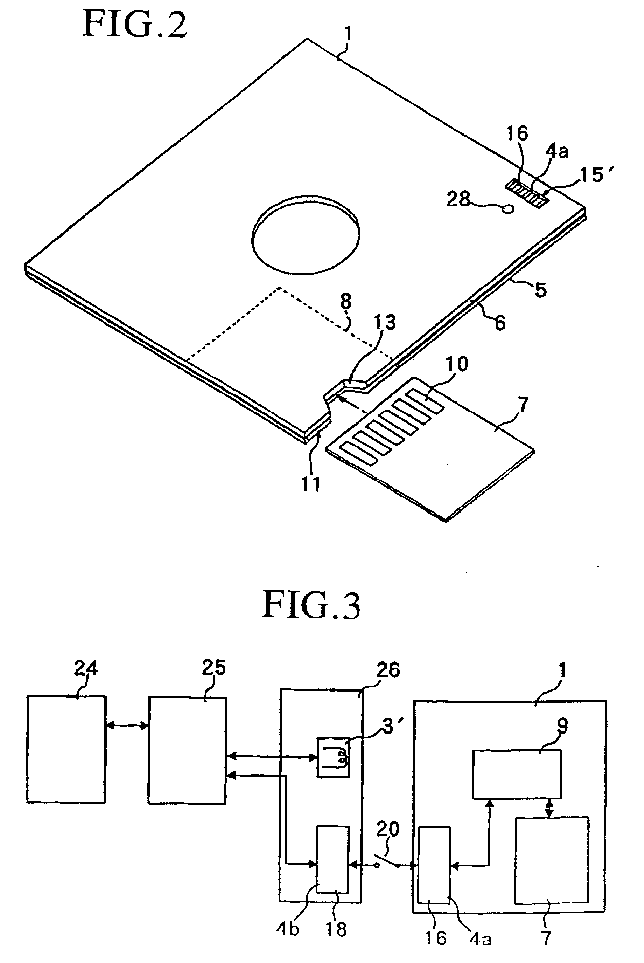

Referring first to Figs. 1 and 2, a dummy FD cartridge 1 has an exterior configuration like that of an FD so that it can be inserted into an FD inlet port 2 of an FD corresponding electronic unit. There are two kinds of dummy FD cartridges, as described hereinafter in detail, which can be employed in the present invention.

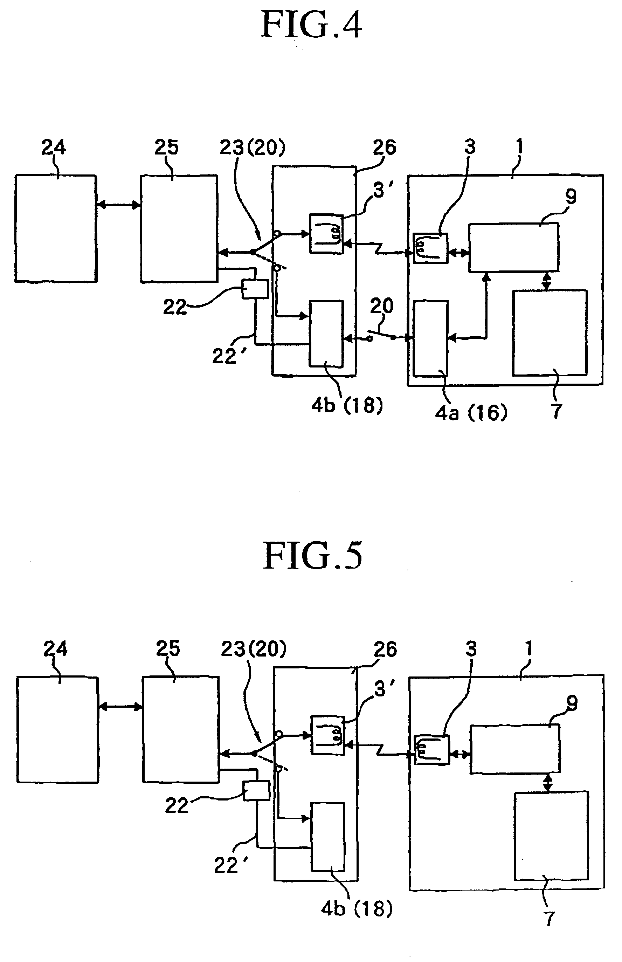

The first kind of such a dummy FD cartridge is denoted by reference numeral 1. This dummy FD cartridge 1 includes, as typically shown in Figs. 1 and 4, includes a magneto-electric converter 3 and a contact means 4a for the input/output of electric signal. The second kind of such a dummy FD cartridge, likewise denoted by reference numeral 1, includes, as typically shown in Figs. 2 and 3, only the contact means 4a.

The dummy FD cartridge 1 of Figs. 1 and 2 comprises a cover plate 5, a top plate 6, and an IC receiving space 8 defined between the cover plate 5 and the top plate 6. It further comprises a wiring circuit board 9, as typically shown in Fig. 6, disposed therein and adapted to form a control circuit for controlling the write of electric signal from an FD corresponding electronic unit to an IC card 7, or the read of electric signal from the IC card 7 to the FD corresponding electronic unit. In the first type of a dummy cartridge 1 of Fig. 1, the magneto-electric converter 3 and the contact means 4a are connected in parallel relation as shown in Fig. 4.

On the other hand, in the second type of a dummy FD cartridge 1 of Fig. 2, only the contact means 4a are connected to the wiring circuit board 9 as shown in Fig. 3. The IC card 8 contains an IC chip. It has a plurality of electrode pads 10 serving as external terminals for the IC chip which are arranged in parallel relation on one surface thereof,

As shown in Figs. 1 and 2, the dummy FD cartridge 1 is provided at one side thereof adjacent to its corner portion with a card inlet port 11 for allowing insertion and withdrawal of the IC card 7. The IC card 7 is inserted into the card receiving space 8 through the card inlet port 11.

As shown in Fig. 1(B), a plurality of contacts 12 are disposed within the card receiving space 8. When the IC card 7 is inserted into the card receiving space 8, the electrode pads 10 on the IC card 7 are brought into contact with the contacts 12 within the card receiving space 8. In this way, the electrode pads 10 are electrically connected to the wiring circuit Doard 9 through the contacts 12.

One end edges of the top plate 5 and base plate 6 which defines the card inlet port 11 are cut out to form a card outlet port 13. For withdrawal, a rear end of the IC card 7, which is once inserted into the dummy FD cartridge 1, is exposed within the card outlet port 13 so that the exposed rear end of the IC card 7 can be pinched with fingers.

The magneto-electric converter head 3 had by the dummy FD cartridge 1 typically shown in Figs. 1, 4 and 5 is disposed at a front end portion of the cartridge corresponding to a magneto-electric converting head 3' disposed within an FD receiving space 14 formed in the FD corresponding electronic unit. A magnetic input/output contacting window 15 is formed in a front end of the base plate 6 or the cover plate 5 in such a manner as to oppose the magneto-electric converter 3.

On the other hand, in the dummy FD cartridge having a contact means 4a as typically shown in Figs. 1 to 4, a contacting window 15' is, as shown in Fig. 6, formed in a local area of the base plate 6 or the cover plate 5 opposing the wiring circuit board 9. Control circuit contact terminals 16 arranged in parallel relation on a surface of the wiring circuit board 9 are disposed within the contacting window 15' or in opposing relation to the contacting window 15'. The arrangement being such that when the dummy FD cartridge 1 is inserted into the FD receiving port 2 of the FD corresponding electronic unit, the electric signal circuit contact terminals 18 disposed within the FD receiving port 2 and the control circuit contact terminals 16 are brought into contact with each other through the contacting window 15', thereby closing the electric signal circuit.

Also, as shown in Figs. 7, a contacting window 15' is formed in a local area of a base plate 5 and an insulative connector block 17 mounted on the wiring circuit board 9 is disposed within the contacting window 15' or in opposing relation to the contacting window 15', and a control circuit contact terminal 16 had by the connector block 17 is disposed within the contacting window 15' or in opposing relation to the contacting window 15', electric signal circuit contact terminals 18 disposed within the FD inlet port 2 and the control circuit contact terminals 16 are brought into contact with each other through the contacting window15' when the dummy FD cartridge 1 is inserted into the FD inlet port 2 of the FD corresponding electronic unit, thereby closing the electric signal circuit.

Preferably, as shown in Figs. 6 and 7, a contact piece portion of the control circuit contact terminal 16 is disposed at a location slightly lower than an external opening surface of the contacting window 15'. That is to say, the contact piece portion of the contact terminal 16 is disposed at a location slightly lower than an external opening surface of the base plate 6 or the cover plate 5 which constitutes the contacting window 15'.

Reference 19 of Figs. 6 and 7 denotes an electric signal circuit connector block which is disposed within the FD receiving port 2 of the FD corresponding electronic unit. This connector block 19 is made of an insulative material. The electric signal circuit contact terminal 18 is retained by the connector block 19. The contact piece portion of the contact terminal 18 is disposed within the contacting window 15'. The contact terminals 16 and 18 are brought into contact with each other within the contacting window 15' to thereby close the electric signal circuit.

Figs. 3 to 5, 8 and 9 show block diagrams of an electric signal circuit and a magnetic signal circuit which are formed between the FD corresponding electronic unit and the dummy FD cartridge. Reference numeral 24 denotes a data electronic unit such as a personal computer, a word processor, a television set, an electronic pocket notebook or the like; 25, a disc controller connected to the data electronic unit 24; and 16, an FD drive unit connected to the data electronic unit through the disc controller 25, respectively. The FD drive unit 26 includes the FD inlet port 2, and it further includes the magneto-electric converting head 3' and the electric signal circuit forming contact means 4b which are disposed within the FD inlet port 2. The magneto-electric converting head 3' and the contact means 4b are connected in parallel relation to the disc controller 25.

In the illustrated example, the data electronic unit 24, the disc controller 25 and the FD drive unit 26 corresponds the FD corresponding electronic unit.

Figs. 6 and 7 denotes an apparatus comprising contact means 4a, 4b for forming an electric signal circuit between an FD inlet port 2 of the FD corresponding electronic unit and a dummy FD cartridge 1, the contact means being contacted with each other through a contacting window 15' formed in a cover plate or a base plate constituting the dummy FD cartridge 1 when the dummy FD cartridge lis inserted into the FD inlet port 2, a magnetic signal circuit being switched to an electric signal circuit through contact of the contact means 4a, 4b so that read or write can be carried out between the IC card 7 withdrawably inserted into the dummy FD cartridge 1 and the FD corresponding electronic unit by electric signal. The switch means is denoted by reference numeral 20 in Figs. 3 and 4, as well as in elsewhere.

This switch means 20 is formed between the contact means 4b which is formed by the contact terminal 18 which is disposed within the FD inlet port 2 of the FD corresponding electronic unit and the contact means 4a which is formed by the contact terminal 16 which is disposed at the dummy FD cartridge 1.

As well known, a container 21 disposed within the FD inlet port 2 of Figs. 6 and 7 is lowered from an upper position to a lower position when the FD is inserted into the container 21, and the container 21 with the FD received therein is lifted from the lower position to the upper position when an FD eject button is depressed. Therefore, when the dummy FD cartridge 1 is inserted into or withdrawn from the container 21, the dummy FD cartridge 1 is moved upward and downward together with the container 21.

Fig. 3 shows an example of the switch means 20 which is formed by up and down movement of the FD-contained container 21, up and down movement of the dummy FD cartridge 21 having only the contact means 4a of Fig. 2 and the contact means 4a, 4b which are opened and closed by this up and down movement.

That is to say, in the contact means 4a, 4b forming an electronic signal circuit, when the cartridge 1 having the contact means 4a is inserted into the FD inlet port 2 and the container 21 and the cartridge 1 are lowered, the contact terminals 16, 18 of Figs. 6 and 7 are brought into contact with each other under pressure. That is to say, the switch means 20 of Fig. 3 is closed, the electric signal circuit between the FD corresponding electronic unit and the IC card 7 is closed and read/write is carried out by electric signal.

Fig. 4 shows an example of the switch means 20 in which a dummy FD cartridge 1 having both the electro-electric converter 3 and the contact means 4a of Fig. 1 is applied to an FD corresponding electronic unit.

More specifically, when the cartridge 1 is inserted into the FD inlet port 2 and the container 21 and the cartridge 1 are lowered, the contact terminals 16 and 18 of Figs. 6 and 7 are brought into contact with each other. At the same time, the switching circuit 22 is closed through the switching circuit 22'. By this switching circuit 22, a switch 23 disposed within the FD corresponding electronic unit is switched from the magneto-electric converting head 3' side to the contact means 4b side, thereby closing the electric signal circuit.

In Fig. 4, the switch means 20 for switching the circuit from the magnetic signal circuit to the electric signal circuit is formed by the contact means 4a, 4b and the switch 23.

Fig. 5 shows an example disclosed by U.S. patent No. 5,584,043, in which a dummy FD cartridge 1 having only a magneto-electric converter 3 is inserted into the FD inlet port 2. The switch 23 is normally switched over and connected to the magneto-electric converting head 3'. The converter 3 of the cartridge 1 and the converting head 3' are brought into corresponding relation, the magnetic signal circuit is closed and writing, etc. with respect to the IC card 7 within the cartridge is carried out. Accordingly, even the dummy cartridge 1 having only the magneto-electric signal converter 3' can be used without any inconvenience.

Figs. 8 to 11 show an apparatus for applying an IC card 7 to an FD corresponding electronic unit comprising a contacting window 15' formed in a cover plate 5 or a base plate 6 which constitutes a dummy FD cartridge 1, contact means 4a, 4b for forming an electric signal circuit between an FD inlet port 2 of the FD corresponding electronic unit and the dummy FD cartridge 1, the contact means 4a, 4b being contacted with each other through the contacting window when the dummy FD cartridge 1 is inserted into the FD inlet port 2. and switch means 27 for switching from a magnetic signal circuit to an electric signal circuit by detecting means disposed at the dummy FD cartridge 1 when the dummy FD cartridge 1 is inserted into the FD inlet port 2, read or write being carried out between the IC card 7 withdrawably inserted into the dummy FD cartridge 1 and the FD corresponding electronic unit by electric signal.

The detecting means is capable of detect a recess 28 formed in the dummy FD cartridge 1. As shown in Fig. 10, the recess 28 is composed of a through-hole which is formed all the way through the dummy FD cartridge 1 from an upper surface to a lower surface thereof. The through-hole piercingly extends all the way through the cover plate 5, the base plate 6 and the control circuit wiring circuit board 9, This recess 28 in the form of a through-hole is defined by a cylindrical wall 29 erected from an inner surface of the cover plate 5 or the base plate 6 by means of an integral molding technique. The cylindrical wall 29 is interposed between the cover plate 5 and the base plate 6. Therefore, the through-hole (recess 28) is isolated from a space formed between the cover plate 5 and the base plate 6 and open at outer surfaces of the cover plate 5 and base plate 6.

As shown in Figs. 1 and 2, the through-hole, i.e., recess 28 as an object for detection, is adjacent to the contact terminal 16 forming the contact means 4a. In other word, the recess 28 is disposed proximate to the contacting window 15'.

The form of the recess 28 is not limited to the above through-hole. It may take the form of a depression having a bottom formed in an external surface of the cover plate 5 or the base plate 6 or a cutout formed in a end edge of the cover plate 5 or the base plate 6.

As shown in Figs. 10(A) and 10(B), a switch means 27 is disposed within the FD inlet port 2 of the FD drive unit 26. This switch means 27 is disposed at a location corresponding to the recess 28. The switch means 27 is in contact with the contact terminal 18 side, i.e., contact means 4b side and held in standby position in that condition. The switch means 27 is comprised of a base block 30 made of insulative material, a pressure-receiving element 31 disposed on the base block 30 for movement up and down and contact pieces 32, 33, 34 which form a switch. The switch means 27 is held in standby position with the pleasure-receiving element 31 supported by the contact piece 32 and with a distal end of the pleasure-receiving element 31 allowed to project upwardly of the base block 30.

The one pair of contact pieces 32, 33 constitute a normally-closed switch, while the contact pieces 33, 34 constitute a normally-open switch.

As shown in Figs. 8, 10(A) and 10(B), when the dummy FD cartridge 1 having the recess 28 and the contact terminal 16 is inserted into the FD inlet port 2 of the FD drive unit 26 and the dummy FD cartridge 1 is lowered together with the container 21, the contact terminals 16, 18 are, as previously mentioned, brought into contact under pressure with each other through the contacting window 15' and at the same time, the pressure-receiving element 31 is received into the recess 28.

As a consequence, the contact pieces 32, 33, which constitute the switch means 27, keep closing the electric signal circuit and read/write is carried out between the FD corresponding electronic unit and the IC card 7 by electric signal.

As shown in Figs. 9 and 11, when the dummy FD cartridge 1 having no electric signal circuit forming contact terminal 16, i.e., contact means 4a, or a known FD is inserted into the container 21 within the inlet port 2 and the dummy FD cartridge or the known FD is lowered together with the container 21, the contact terminals 16, 18 are not brought into contact with each other because the dummy cartridge 1 or the known FD does not have the recess 28 nor the contacting window 15'. The pleasure-receiving element 31 is pressed by the cover plate or the base plate to press the contact piece 32 (which constitutes one pair of contact pieces together with the contact piece 33 as mentioned above) so that the electric signal circuit is closed. It also presses the contact piece 32 against the contact piece 34 so as to be switched towards the magneto-electric converting head 3' side, so that the magnetic signal circuit is closed.

As a consequence, read/write is carried out between the FD corresponding electronic unit and the IC card within the dummy FD cartridge or the magnetic disc within the known FD by means of magnetic signal.

Although the switch means 27 of Figs. 8 to 11 is held in standby position in the state that the electric signal circuit is closed, the present invention also includes a modification in which the switch means 27 is held in standby position in the state that the magnetic signal circuit is closed.

Although Fig. 10 shows an example in which the contact terminal 16 is retained by the connector block 17 of Fig. 7, the contact terminal 16 may be provided on a lead end extending along the upper surface of the wiring circuit board 9 of Fig. 6.

As described previously, according to the present invention, the circuit is switched from the magnetic signal circuit to the electric signal circuit by inserting the dummy cartridge equipped with the contact means for forming an electric signal circuit, so that data transfer is carried out between the FD corresponding electronic unit and the dummy FD cartridge by electric signal. Accordingly, the writing speed to the 1C card and the reading speed from the IC card to the FD corresponding electronic unit can be enhanced remarkably.

Moreover, since no data transfer is carried out by means of magnetic signal, the writing and reading reliability is extensively enhanced.

Furthermore, since the contacting window is formed in a local area of the cover plate or the base plate which constitutes the dummy FD cartridge so that the electric signal circuit contact terminal and the control circuit contact terminal are brought into contact with each other through the contacting window to thereby close the electric signal circuit, the reading and writing can be carried out correctly between the IC card and the FD corresponding electronic unit by electric signal.

Obviously, numerous modifications and variations of the present invention are possible in light of the above teachings. It is therefore to be understood that within the scope of the appended claims, the invention may be practiced otherwise than as specifically described herein.

## Claims

1. An apparatus for applying an IC card to an FD corresponding electronic unit comprising contact means for forming an electric signal circuit between an FD inlet port of said FD corresponding electronic unit and a dummy FD cartridge, said contact means being contacted with each other through a contacting window formed in a cover plate or a base plate constituting said dummy FD cartridge when said dummy FD cartridge is inserted into said FD inlet port, a magnetic signal circuit being switched to an electric signal circuit through contact of said contact means so that read or write can be carried out between said IC card withdrawably inserted into said dummy FD cartridge and said FD corresponding electronic unit by electric signal.

2. An apparatus for applying an IC card to an FD corresponding electronic unit comprising contact means for forming an electric signal circuit between an FD inlet port of said FD corresponding electronic unit and a dummy FD cartridge, said contact means being contacted with each other through a contacting window formed in a cover plate or a base plate constituting said dummy FD cartridge when said dummy FD cartridge is inserted into said FD inlet port, and switch means for switching from a magnetic signal circuit to an electric signal circuit by detecting means disposed at said dummy FD cartridge when said dummy FD cartridge is inserted into said FD inlet port, read or write being carried out between said IC card withdrawably inserted into said dummy FD cartridge and said FD corresponding electronic unit by electric signal.

3. An apparatus for applying an IC card to an FD corresponding electronic unit according to claim 2, wherein said detecting means is capable of detecting a recess formed in said dummy FD cartridge.

4. An apparatus for applying an IC card to an FD corresponding electronic unit in which a dummy FD cartridge is inserted into an FD inlet port formed in said FD corresponding electronic unit so that read or write is carried out between said IC card withdrawably inserted into said dummy FD cartridge and said FD corresponding electronic unit by electric signal, said apparatus comprising a wiring circuit board disposed within said dummy FD cartridge and adapted to form a control circuit to be connected to said IC card, a contacting window formed in a local area of a base plate or a cover plate which is disposed in opposing relation to said wiring circuit board, and a plurality of control circuit contact terminals arranged in parallel relation on a surface of said wiring circuit board being disposed within said contacting window or in opposing relation to said contacting window, electric signal circuit contact terminals disposed within said FD inlet port and said control circuit contact terminals being brought into contact with each other through said contacting window when said dummy FD cartridge is inserted into said FD inlet port of said FD corresponding electronic unit, thereby closing said electric signal circuit.

5. An apparatus for applying an IC card to an FD corresponding electronic unit in which a dummy FD cartridge is inserted into an FD inlet port formed in said FD corresponding electronic unit so that read or write is carried out between said IC card withdrawably inserted into said dummy FD cartridge and said FD corresponding electronic unit by electric signal, said apparatus comprising a wiring circuit board disposed within said dummy FD cartridge and adapted to form a control circuit to be connected to said IC card, a contacting window formed in a local area of a base plate or a cover plate which is disposed in opposing relation to said wiring circuit board, and a connector block mounted on said wiring circuit board being disposed within said contacting window or in opposing relation to said contacting window, and a control circuit contact terminal had by said connector block being disposed within said contacting window or in opposing relation to said contacting window, electric signal circuit contact terminals disposed within said FD inlet port and said control circuit contact terminals being brought into contact with each other through said contacting window when said dummy FD cartridge is inserted into said FD inlet port of said FD corresponding electronic unit, thereby closing said electric signal circuit.
